# EUROPÄISCHE PATENTSCHRIFT

(11) **EP 3 584 475 B1**
(45) Veröffentlichungstag und Bekanntmachung des Hinweises auf die Patenterteilung: **23.03.2022**
(21) Anmeldenummer: 19176072.7
(22) Anmeldetag: 23.05.2019
(51) Int. Cl.: F16K 3/24, F16K 27/02, F16K 31/124, F16K 37/00, F16K 27/04

(54) **VORGESTEUERTES HYDRAULISCHES WEGE-EINBAUVENTIL**
PILOT-OPERATED HYDRAULIC INSTALLED DISTRIBUTING VALVE
SOUPAPE À VOIES INTÉGRÉE HYDRAULIQUE PILOTÉE

(30) Priorität: 20.06.2018 DE 102018209954; 17.07.2018 DE 102018211866
(43) Veröffentlichungstag der Anmeldung: 25.12.2019
(73) Patentinhaber: Robert Bosch GmbH, 70442 Stuttgart (DE)
(72) Erfinder: Urlaub, Bernd, 97854 Steinfeld (DE); Wolf, Johannes, 97848 Rechtenbach (DE); Nguyen-Xuan, Binh, 97846 Partenstein (DE); Reith, Werner, 97776 Eussenheim (DE)

(56) Entgegenhaltungen:
- CN-U- 202 118 266
- CN-U- 203 948 754
- DE-A1- 19 544 591
- DE-A1-102013 107 306
- DE-A1-102016 209 439
- US-A- 5 868 160
- Moog: "2-WAY SLIP-IN CARTRIDGE VALVES DIRECTIONAL AND PRESSURE FUNCTION", , 30 June 2013 (2013-06-30), pages 1-56, XP055731424, Retrieved from the Internet: URL:https://www.moog.com/content/dam/moog/ literature/ICD/Moog-CartridgeValves-2way_S tard-Catalog-en.pdf [retrieved on 2020-09-16]
- DUPLOMATIC: "ELEMENTOS LOGICOS: LC * VALVULAS A CARTUCHO ISO 7368 - DIN 24342 . LP * TAPAS PARA VALVULAS A CARTUCHO.", , 13 July 2006 (2006-07-13), pages 1-24, XP055731406, Retrieved from the Internet: URL:http://www.hidraulik.com.ar/imgs/vr_lo gic%20elements/48900-3.pdf [retrieved on 2020-09-16]

## Beschreibung

Die Erfindung betrifft ein vorgesteuertes hydraulisches Wege-Einbauventil mit einer in eine Einbaubohrung eines Hydraulikblocks einzusetzender Einbaubuchse, die eine Innenbohrung hat und die zu ihrer vorderen Stirnseite hin einen ersten Buchsenabschnitt mit einem ersten äußeren Dichtdurchmesser und zu ihrer hinteren Stirnseite hin einen dritten Buchsenabschnitt mit einem gegenüber dem Dichtdurchmesser im ersten Buchsenabschnitt größeren zweiten äußeren Dichtdurchmesser und dazwischen einen zweiten Buchsenabschnitt aufweist, in dem sie eine Reihe von radialen Öffnungen hat und in dem sie im Bereich und jeweils über eine gewisse Strecke beidseits der radialen Öffnungen einen Außendurchmesser besitzt, der größer als der erste äußere Dichtdurchmesser und kleiner als der zweite äußere Dichtdurchmesser ist. Das Wege-Einbauventil hat darüber hinaus einen Steuerschieber, der zu seiner hydraulischen Betätigung einen Schieberbund besitzt und der in der Innenbohrung der Einbaubuchse in axialer Richtung geführt ist und mit dem ein Durchflussquerschnitt zwischen der Innenbohrung und den radialen Öffnungen steuerbar ist. Der Steuerschieber ist zumindest hinter den radialen Öffnungen in der Einbaubuchse auf einem Führungsdurchmesser in axialer Richtung geführt. Der Innendurchmesser der Einbaubuchse ist bis in den Bereich der radialen Öffnungen mindestens so groß wie der Führungsdurchmesser.

Die DE 10 2016 209 439 A1 zeigt ein Sitzventil mit Rückschlagfunktion. Es ist als Aktivlogikventil in Cartridgebauweise ausgeführt. Ein Ventilkolben ist in einem zweiteilten Ventigehäuse geführt. Der Ventilkolben hat einen Schieberbund, der zwei Steuerdruckräume voneinander trennt. Einer der Steuerdruckräume ist ein Ringraum, während der andere Steuerdruckraum stirnseitig angeordnet ist.

Die DE 10 2013 107 306 A1 zeigt ein Sitzventil, dessen Hülse in einen Ventilblock eingesetzt ist. Ein bewegliches Schließglied des Ventils hat einen Flansch, der einen in Schließrichtung wirkenden Ringraum begrenzt.

Das Dokument "2-Way Slip-In Cartrige Vales Directonal and Pressure Function" von Moog aus dem Jahr 2013 offenbart verschiede Aktivlogikventile in Cartridgebauweise, die der DIN ISO 7368 entsprechen.

Die Maße für die Einbaubohrung, in die die Einbaubuchse einzusetzen ist, sind durch die DIN ISO 7368 genormt und je nach Nenngröße des Wege-Einbauventils verschieden groß. Dadurch sind eine Reihe von Maßen der Einbaubuchse vorgegeben und können nicht verändert werden, sofern der Norm Rechnung getragen werden soll. Insbesondere ist der Durchmesser der Einbaubohrung in den Bereichen, in denen sich nach dem Einsetzen der Einbaubuchse deren erster Buchsenabschnitt und deren dritter Buchsenabschnitt befinden, durch die Norm vorgegeben. Vorgegeben ist damit auch der äußere Dichtdurchmesser im ersten Buchsenabschnitt und der äußere Dichtdurchmesser im dritten Buchsenabschnitt. Diese Dichtdurchmesser sind im Wesentlichen gleich den entsprechenden Durchmessern der Einbaubohrung.

Ein vorgesteuertes hydraulisches Wege-Einbauventil mit den oben angegebenen Merkmalen ist aus dem Datenblatt RD 29137/08.13 oder dem Datenblatt RD 29136/12.04 der Bosch Rexroth AG bekannt. Das Wege-Einbauventil kann ein 2-Wege- oder ein 3-Wege- Einbauventil sein, wobei das 2-Wege-Einbauventil üblicherweise als Sitzventil ausgebildet ist und das 3-Wege-Einbauventil üblicherweise ein reines Schieberventil ist.

Bei einem solchen Wege-Einbauventil sollen hohe Volumenströme in beide Durchflussrichtungen möglich sein.

Dies wird dadurch erreicht, dass das Verhältnis zwischen dem ersten äußeren Dichtdurchmesser und dem Führungsdurchmesser für den Steuerschieber im Bereich zwischen 1,10 und 1,28 liegt.

Demnach zeichnet sich die Einbaubuchse durch einen besonders großen Innendurchmesser aus, der große Volumenströme ermöglicht. Der Steuerschieber kann entsprechend dem gro-ßen Führungsdurchmesser groß gemacht werden, so dass in Positionen des Steuerschiebers, in denen das Ventil geöffnet ist, ein großer Durchflussquerschnitt zwischen Steuerschieber und der Einbaubuchse besteht. Dieser große Durchflussquerschnitt ermöglicht gro-ße Volumenströme ohne einen nicht mehr akzeptablen Druckabfall über das Ventil. Der Au-ßendurchmesser der Einbaubuchse ist im Bereich des ersten, vorderen Buchsenabschnitts und im Bereich des dritten Buchsenabschnitts durch die Norm festgelegt. Die beiden Buchsenabschnitte sind außen üblicherweise mit einer umlaufenden Ringnut versehen, in die ein Dichtring eingelegt ist. Auf diese Weise werden durch den ersten Buchsenabschnitt ein axialer Arbeitsanschluss und ein radialer Arbeitsanschluss und durch den dritten Buchsenabschnitt der radiale Arbeitsanschluss nach außen abgedichtet. Mit vordere wird hier die Stirnseite der Einbaubuchse bezeichnet, die bei Einsetzen der Einbaubuchse in die Einbaubohrung als erste in die Einbaubohrung eintaucht. Entsprechend werden die Begriffe "vorne" und "hinten" gebraucht.

Das erfindungsgemäße vorgesteuerte hydraulische Wegeventil umfasst, wie an sich bekannt, einen Ventildeckel, der auf die Einbaubuchse aufgesetzt ist. In an sich ebenfalls bekannter Weise ragt der Steuerschieber in den Ventildeckel hinein und der Schieberbund trennt zusammen mit dem Deckel zwei Steuerkammern voneinander. Zur Betätigung des Steuerschiebers wird über ein Vorsteuerventil der einen Steuerkammer Druckmittel zugeführt und aus der anderen Steuerkammer Druckmittel abgelassen.

Zwischen dem zweiten Buchsenabschnitt der Einbaubuchse und der Wand der Einbaubohrung ist ein Ringkanal vorhanden, um alle über den Umfang der Einbaubuchse verteilten radialen Öffnungen für den Fluss von Druckmittel nutzen zu können. Von dem Ringkanal geht ein im Hydraulikblock verlaufender Kanal aus, der Teil eines zu einem hydraulischen Verbraucher führenden Fluidpfades ist.

Vorzugsweise liegt das Verhältnis zwischen dem ersten äußeren Dichtdurchmesser und dem Führungsdurchmesser im Bereich zwischen 1,12 und 1,27, insbesondere im Bereich zwischen 1,12 und 1,25.

Ist das Wege-Einbauventil ein Sitzventil, so wirkt der Steuerschieber mit einer Sitzsteuerkante mit einer sich in der Innenbohrung vor den radialen Öffnungen zwischen diesen und der vorderen Stirnseite an der Einbaubuchse befindlichen Innenstufe zusammen, wobei der Steuerschieber zumindest hinter den radialen Öffnungen auf dem Führungsdurchmesser der Einbaubuchse in axialer Richtung geführt ist und der Innendurchmesser der Einbaubuchse bis in den Bereich der radialen Öffnungen mindestens so groß wie der Führungsdurchmesser ist. Das Verhältnis zwischen dem ersten äußeren Dichtdurchmesser und dem Führungsdurchmesser liegt dann vorzugsweise im Bereich zwischen 1,10 und 1,22, insbesondere im Bereich zwischen 1,12 und 1,20.

Vorzugsweise ist der Innendurchmesser der Einbaubuchse von der vorderen Stirnseite her bis zur Innenstufe im Wesentlichen konstant, wobei das Verhältnis zwischen dem ersten äu-ßeren Dichtdurchmesser und dem Innendurchmesser der Einbaubuchse von der vorderen Stirnseite bis zur Innenstufe in einem Bereich zwischen 1,10 und 1,30, insbesondere in einem Bereich zwischen 1,15 und 1,25 liegt. Damit ist innerhalb der Einbaubuchse ein großer axialer Zufluss- beziehungsweise großer axialer Abflusskanal für die Druckflüssigkeit geschaffen.

Der zweite Buchsenabschnitt der Einbaubuchse hat vorteilhafterweise einen konstanten Au-ßendurchmesser, wobei das Verhältnis zwischen dem konstanten Außendurchmesser des zweiten Buchsenabschnitts der Einbaubuchse und dem Führungsdurchmesser im Bereich zwischen 1,15 und 1,35, insbesondere zwischen 1,20 und 1,30 liegt.

Es ist von Vorteil, wenn die Innenstufe an der Einbaubuchse nur eine sehr geringe Breite hat, da dann die Strömung nur wenig umgelenkt wird und ein großer Zufluss- beziehungsweise Abflussquerschnitt für die Druckflüssigkeit zur Verfügung steht. Unter Breite der Innenstufe wird dabei die halbe Differenz zwischen dem Führungsdurchmesser und dem Innendurchmesser der Einbaubuchse an der inneren Kante der Innenstufe verstanden. Die Innenstufe hat vorzugsweise eine Breite in einem Bereich zwischen 0,8 mm und 1,7 mm, insbesondere in einem Bereich zwischen 1 mm und 1,5 mm. Insbesondere beträgt die Breite der Innenstufe 1 mm oder 1,5 mm. Der Wert hängt vor allem von der Nenngröße des erfindungsgemäßen Wege-Einbauventils ab. Er kann zum Beispiel für die kleinen Nenngrößen NG32, NG40, NG50 1 mm und für die großen Nenngrößen NG63, NG80 und NG100 1,5 mm sein.

Um die Gefahr eines Risses oder eines Bruches am Übergang zwischen dem ersten Buchsenabschnitt und dem zweiten Buchsenabschnitt der Einbaubuchse gering zu halten, kann am Übergang vom ersten Buchsenabschnitt in den zweiten Buchsenabschnitt außen eine umlaufende verrundete Entlastungskerbe vorhanden sein, in der der Außendurchmesser der Einbaubuchse geringer ist als der erste äußere Dichtdurchmesser

Es ist für den Durchfluss von Druckflüssigkeit von Vorteil, wenn die Einbaubuchse im Bereich der radialen Öffnungen innen eine umlaufende Nut aufweist. Die Tiefe der umlaufenden Nut beträgt vorzugsweise 2 mm.

Zweckmäßigerweise weist der Steuerschieber eine Axialbohrung auf, die in einem Fluidpfad zwischen den beiden Stirnseiten des Steuerschiebers liegt, wobei die Axialbohrung von der sich im Bereich der Innenstufe der Einbaubuchse befindlichen, vorderen Stirnseite des Steuerschiebers her über eine gewisse Strecke einen ersten Durchmesser und im Anschluss daran einen zweiten, kleineren Durchmesser hat und wobei sich der Übergang zwischen dem größeren Durchmesser und dem kleineren Durchmesser, von der vorderen Stirnseite aus gesehen, im Abstand hinter der Sitzsteuerkante befindet. Die Axialbohrung im Steuerschieber dient in erster Linie dazu, um den axialen Anschluss des Wege-Einbauventils mit einem Raum vor der hinteren Stirnseite des Steuerschiebers zu verbinden und so am Steuerschieber einen weitgehenden Druckausgleich herzustellen, reduziert jedoch auch das Gewicht des Steuerschiebers im Vergleich zu einem massiven Steuerschieber, so dass der Steuerschieber schneller auf eine Ansteuerung reagiert. Durch den großen Durchmesser der Axialbohrung von der vorderen Stirnseite des Steuerschiebers her wird die den Strömungskräften ausgesetzte Fläche am Steuerschieber reduziert.

An der Kante zwischen der Axialbohrung des Steuerschiebers und der vorderen Stirnseite des Steuerschiebers befindet sich vorteilhafterweise eine Fase, vorzugsweise eine 30-Grad-Fase. Dadurch wird die Stirnfläche des Steuerschiebers weiter reduziert. Die Strömungskräfte werden geringer.

Für eine gute Abdichtung des hinteren Bereichs des Ventils gegen die Arbeitsanschlüsse kann der Steuerschieber eine außen an ihm umlaufende Ringnut aufweisen, in der sich ein Dichtring befindet, wobei die Position der Ringnut am Steuerschieber derart ist, dass sich die Ringnut axial gesehen im Bereich des zweiten Buchsenabschnitts der Einbaubuchse befindet, wenn der Steuerschieber auf der Innenstufe der Einbaubuchse aufsitzt. Der Übergang zwischen dem größeren Durchmesser und dem kleineren Durchmesser der Axialbohrung im Steuerschieber befindet sich vorteilhafterweise im Abstand vor der Ringnut, so dass der Steuerschieber im Bereich der Ringnut nicht zu sehr geschwächt ist.

Bevorzugt ist der Abstand des Übergangs zwischen dem größeren Durchmesser und dem kleineren Durchmesser der Axialbohrung im Steuerschieber von der Sitzsteuerkante etwa halb so groß wie der Abstand der Ringnut und des Dichtrings von der Sitzsteuerkante.

Die Ringnut und der Dichtring können sich in einem Führungsbereich des Steuerschiebers befinden, wobei der Steuerschieber beidseits der Ringnut Druckausgleichsrillen aufweist.

Ein Ausführungsbeispiel eines erfindungsgemäßen vorgesteuerten hydraulischen Wege-Einbauventils ist in den Zeichnungen dargestellt. Anhand der Figuren dieser Zeichnungen wird die Erfindung nun näher erläutert.

Es zeigen
- Figur 1: das gesamte Einbauventil teilweise in Ansicht, teilweise im Schnitt,
- Figur 2: in einem gegenüber der Ansicht nach Figur 1 vergrößerten Maßstab eine äußere Ansicht der bloßen Einbaubuchse,
- Figur 3: die Einbaubuchse nach Figur 2 in einem Längsschnitt,

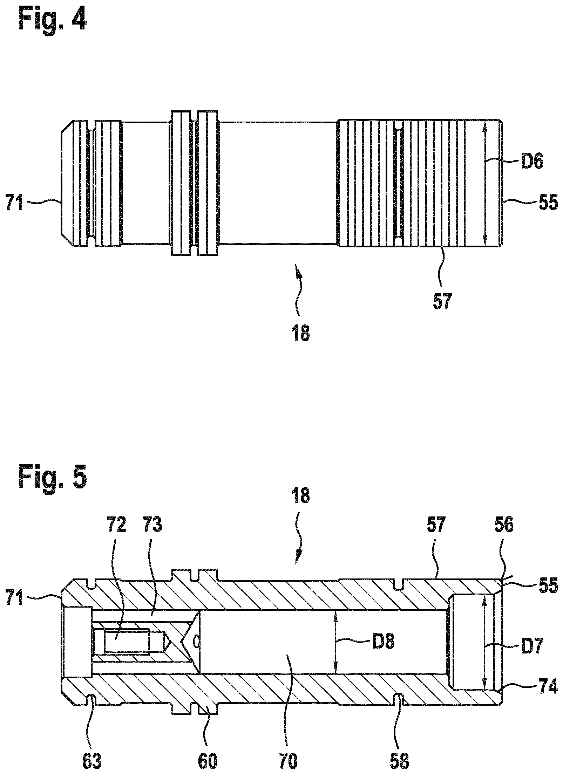

- Figur 4: in einem gegenüber der Ansicht nach Figur 1 vergrößerten Maßstab eine äußere Ansicht des bloßen Steuerschiebers,
- Figur 5: den Steuerschieber nach Figur 4 in einem Längsschnitt und
- Figur 6: eine Einbaubohrung nach DIN ISO 7368.

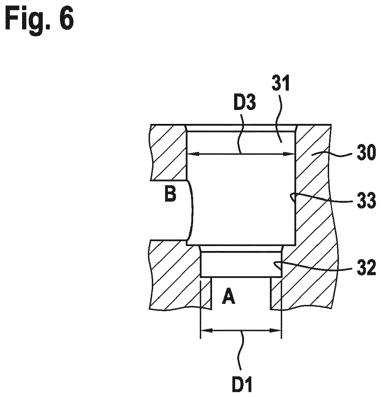

Das gezeigte vorgesteuerte hydraulische Wege-Einbauventil ist ein 2-Wege-Einbauventil und umfasst ein Hauptventil 10, ein Vorsteuerventil 11, einen Wegaufnehmer 12 und eine integrierte Elektronik 13. Das Hauptventil 10 wiederum weist eine Einbaubuchse 15 auf, die eine Innenbohrung 16 hat und die dafür vorgesehen ist, mit einer vorderen Stirnseite 29 voraus in eine Einbaubohrung 31 eines Hydraulikblocks 30 eingesetzt zu werden, wie einer ausschnittsweise in Figur 6 dargestellt ist. Die Einbaubuchse 15 ist an einem Deckel 17 gehalten, der bei der Montage des Ventils mit dem Hydraulikblock verschraubt wird. Das Hauptventil weist weiterhin einen Steuerschieber 18 auf, der in der Einbaubuchse 15 axial beweglich geführt ist und in eine Bohrung 19 des Deckels 17 hineinragt. Die Bohrung 19 hat zwar einige Erweiterungen, wird hier aber trotzdem als Bohrung bezeichnet. Sie ist gestuft, wobei sie von einer der Einbaubohrung zugekehrten, vorderen Seitenfläche 20 ausgehend einen ersten Abschnitt 21 mit einem großen Durchmesser, dem folgend einen Abschnitt 22 mit einem kleineren Durchmesser und schließlich einen an der hinteren Seitenfläche 23 offenen Abschnitt 24 mit einem kleinsten Durchmesser aufweist.

In den Abschnitt 24 ist ein Dichtstopfen 25 eingesetzt, durch den hindurch abgedichtet ein fest mit dem Steuerschieber 17 verbundener Kernstab 26 des Wegaufnehmers 12 in ein Gehäuse des Wegaufnehmers 12 geführt ist.

Die Einbaubohrung 31 hat zwei Bohrungsabschnitte 32 und 33, deren Durchmesser D1 und D3 durch die erwähnte Norm vorgegeben sind. Ein Fluidkanal A mündet axial in den Bohrungsabschnitt 32, ein Fluidkanal B mündet radial in den Bohrungsabschnitt 33, der wesentlich länger als der Bohrungsabschnitt 32 ist und dessen Durchmesser D3 größer als der Durchmesser D1 des Bohrungsabschnitts 32 ist. Dementsprechend besitzt die Einbaubuchse 15 vorne einen ersten Buchsenabschnitt 34 mit einem ersten äußerer Dichtdurchmesser, der gleich dem Durchmesser D1 ist. Innerhalb des Buchsenabschnitts 34 weist die Einbaubuchse 15 eine umlaufende Ringnut 35 auf, in die ein Dichtring 36 eingelegt oder einzulegen ist. Beim Einbau der Einbaubuchse 15 in die Einbaubohrung gelangt der erste Buchsenabschnitt 34 in den Bohrungsabschnitt 32 und dichtet an der Außenseite der Einbaubuchse die beiden Arbeitsanschlüsse A und B gegeneinander ab.

Die Einbaubuchse 15 besitzt des Weiteren hinten einen dritten Buchsenabschnitt 42, dessen zweiter äußerer Dichtdurchmesser gleich dem Durchmesser D3 des Bohrungsabschnitts 33 ist. Innerhalb des Buchsenabschnitts 42 weist die Einbaubuchse 15 eine umlaufende Ringnut 38 auf, in die ein Dichtring 39 eingelegt oder einzulegen ist. Beim Einbau der Einbaubuchse 15 in die Einbaubohrung gelangt der dritte Buchsenabschnitt 42 in den Bohrungsabschnitt 33 und dichtet an der Außenseite der Einbaubuchse 15 die Einbaubohrung 31 zum Deckel 17 hin ab.

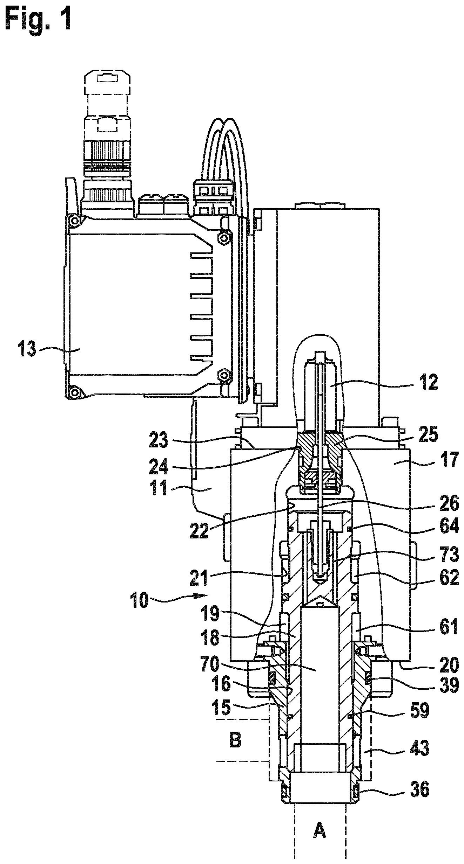

Der dritte Buchsenabschnitt 42 ist wesentlich kürzer als der Bohrungsabschnitt 33. Zwischen dem ersten Buchsenabschnitt 34 und dem dritten Buchsenabschnitt 42 hat die Einbaubuchse 15 einen zweiten Buchsenabschnitt 37, der sich nach dem Einbau ebenfalls im Bereich des Bohrungsabschnitts 33 befindet, dessen konstanter Außendurchmesser D2 jedoch kleiner als der Durchmesser D3 des Bohrungsabschnitts 33 ist, so dass um den Buchsenabschnitt 37 herum ein in Figur 1 angedeuteter Ringkanal 43 gebildet ist. Außen geht der Buchsenabschnitt 37 in einem Konus in den dritten Buchsenabschnitt 37 über.

Der Außendurchmesser D2 des zweiten Buchsenabschnitts 37 ist größer als der erste Dichtdurchmesser D1 des ersten Buchsenabschnitts 34. Am Übergang vom ersten Buchsenabschnitt 34 in den zweiten Buchsenabschnitt 37 ist außen eine umlaufende verrundete Entlastungskerbe 44 vorhanden, in deren Tiefpunkt der Außendurchmesser der Einbaubuchse 15 geringer ist als der erste äußere Dichtdurchmesser D1.

In einem geringen Abstand zu dem ersten Buchsenabschnitt 34 befinden sich in dem zweiten Buchsenabschnitt 37 auf gleicher Höhe mehrere gleichmäßig über den Umfang der Einbaubuchse 15 verteilte und in Achsrichtung der Einbaubuchse 15 längliche, radiale Öffnungen 45, über die eine fluidische Verbindung zwischen dem Ringkanal 43 und dem vor den Öffnungen 45 liegenden Teil der Innenbohrung 16 und damit zwischen den beiden Arbeitsanschlüssen A und B möglich ist. Im Bereich der radialen Öffnungen 45 weist die Einbaubuchse 15 innen eine umlaufende Nut 46 auf, deren Tiefe etwa 2 mm beträgt.

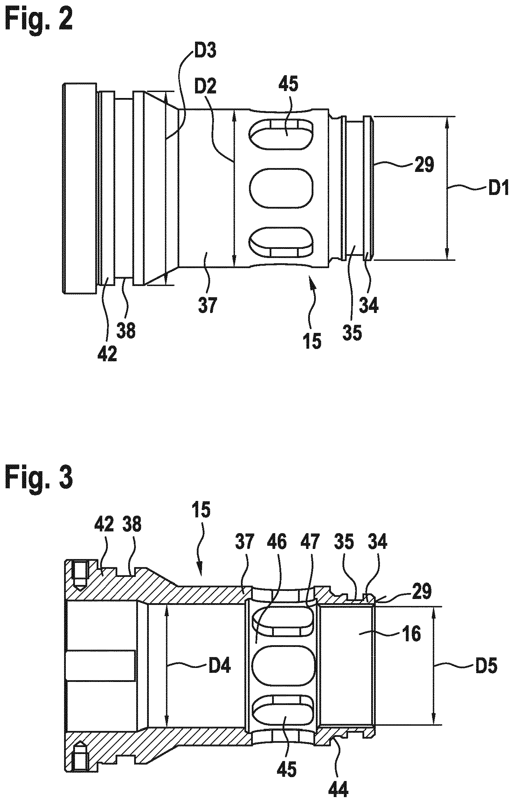

Im Anschluss an die Nut 46 hat die Einbaubuchse 15 im Bereich des zweiten Buchsenabschnitts 37 und des konischen äußeren Übergangs vom zweiten Buchsenabschnitt 37 zum dritten Buchsenabschnitt 42 innen einen Führungsdurchmesser D4, auf dem der Steuerschieber 18 in der Einbaubuchse 15 geführt ist und der kleiner ist als der erste Dichtdurchmesser D1 des ersten Buchsenabschnitts 34. Das Verhältnis zwischen dem ersten Dichtdurchmesser D1 und dem Führungsdurchmesser D4 liegt im Bereich zwischen 1,10 und 1,28. In den Figuren 2 und 3 ist die Einbaubuchse 15 eines Wege-Einbauventils der Nenngröße 40 gezeigt, bei der der erste Dichtdurchmesser D1 gleich 55 mm ist. Der Führungsdurchmesser D4 beträgt vorliegend 48 mm, so dass beim Ausführungsbeispiel das Verhältnis zwischen dem ersten Dichtdurchmesser D1 und dem Führungsdurchmesser D4 gleich 1,146 ist, also in dem Bereich zwischen 1,10 und 1,28, insbesondere in dem Bereich zwischen 1,12 und 1,20 liegt. Das Verhältnis kann bei anderen Nenngrößen anders sein. Ebenfalls kann das Verhältnis davon abhängen, ob des Wege-Einbauventil ein 2-Wege-Einbauventil in Sitzbauweise oder ein 2-Wege-Einbauventil oder ein 3-Wege-Einbauventil in reiner Schieberbauweise ohne Sitz für den Steuerschieber ist.

Im Anschluss an den Bereich mit dem Führungsdurchmesser D4 nach hinten ist der Innendurchmesser der Einbaubuchse 15 geringfügig größer als der Führungsdurchmesser D4.

Der Außendurchmesser des zweiten Buchsenabschnitts 37 ist möglichst klein gehalten, damit die Breite des Ringkanals 43 groß ist. Vorliegend beträgt der Außendurchmesser des zweiten Buchsenabschnitts 37 61 mm. Somit ist das Verhältnis des Außendurchmessers zum Innendurchmesser der Einbaubuchse im Bereich des zweiten Buchsenabschnitts 37 gleich 1,27. Dieser Wert liegt innerhalb eines Bereichs zwischen 1,15 und 1,35 und insbesondere zwischen 1,20 und 1,30. Er kann bei anderen Nenngrößen und anderer Bauweise eine andere Größe haben.

Die in den Figuren 2 und 3 gezeigte Einbaubuchse 15 ist in Sitzbauweise ausgebildet. Dazu geht ihr Innendurchmesser vor den radialen Öffnungen 45 in einer konischen Innenstufe 47 auf einen kleineren Innendurchmesser D5 des ersten Buchsenabschnitts 34 über. Dieser Innendurchmesser D5 ist abgesehen von einer kleinen Fase an der vorderen Stirnseite 29 bis zu dieser Stirnseite hin, also auch im Bereich des ersten Buchsenabschnitts 34 konstant. Er ist möglichst groß und ist im vorliegenden Fall gleich 46 mm. Das Verhältnis zwischen dem ersten Dichtdurchmesser D1 am ersten Buchsenabschnitt 34 und dem Innendurchmesser D5 ist somit 1,196 und liegt damit in einem Bereich zwischen 1,10 und 1,30, insbesondere in dem Bereich zwischen 1,15 und 1,25. Die Breite der Innenstufe 47, die sich aus der Differenz zwischen dem Führungsdurchmesser D4, der gleich 48 mm ist, und dem Innendurchmesser D5 ergibt, ist also 1 mm und liegt somit in einem Bereich zwischen 0,8 und 1,7 mm. Bei größeren Nenngrößen, zum Beispiel ab Nenngröße 63 kann die Breite der Innenstufe auch 1,5 mm betragen.

Der Steuerschieber 18 hat ausgehend von einer vorderen Stirnseite 55 mit einer Sitzsteuerkante 56, mit der er auf der konischen Innenstufe 47 der Einbaubuchse 15 aufsitzen kann, über eine gewisse Länge einen Führungsdurchmesser D6, der gleich dem Führungsdurchmesser D4 der Einbaubuchse 15 ist, wobei die Toleranzen so gewählt sind, dass ein Klemmen des Steuerschiebers in der Innenbohrung 16 ausgeschlossen ist. Die Länge entspricht in etwa dem Abstand zwischen der Innenstufe 47 von der Stelle, an der der Durchmesser der Innenbohrung 16 vom Führungsdurchmesser D4 auf den etwas größeren Innendurchmesser im Bereich des dritten Buchsenabschnitts 42 übergeht. In dem Bereich des Steuerschiebers, in dem dieser auf dem Führungsdurchmesser D4 der Einbaubuchse geführt ist, befinden sich außen am Steuerschieber 18 Druckausgleichsrillen 57. Etwa in der Mitte dieses Bereichs ist in den Steuerschieber 18 eine umlaufende Ringnut 58 eingedreht, in die ein Dichtring 59 eingesetzt oder einzusetzen ist. Damit ist die Bohrung 19 im Deckel 17 innen zu den Arbeitsanschlüssen A und B hin gut abgedichtet. Wenn der Steuerschieber 18 auf der Innenstufe 47 der Einbaubuchse 15 aufsitzt, befinden sich die Ringnut 58 und damit auch der Dichtring 59 im Bereich des zweiten Buchsenabschnitts 37.

Der Steuerschieber 18 hat innerhalb des im Deckel 17 liegenden Bohrungsabschnitts 21, dessen Durchmesser größer als die Führungsdurchmesser D4 und D6 ist, einen Schieberbund 60, durch den in dem Bohrungsabschnitt 21 zwei voneinander getrennte Steuerkammern 61 und 62 gebildet sind, von denen über Fluidpfade im Deckel 17 die eine mit einem ersten Anschluss und die andere mit einem zweiten Anschluss des Vorsteuerventils 11 fluidisch verbunden ist. Wird das Vorsteuerventil so angesteuert, dass Hydrauliköl der Steuerkammer 61 zugeführt und aus der Steuerkammer 62 abgelassen wird, bewegt sich der Steuerschieber 18 in einem solchen Sinn, dass ein Durchflussquerschnitt zwischen den beiden Arbeitsanschlüssen A und B geöffnet oder vergrößert wird. Wird das Vorsteuerventil dagegen so angesteuert, dass Hydrauliköl der Steuerkammer 62 zugeführt und aus der Steuerkammer 61 abgelassen wird, bewegt sich der Steuerschieber 18 in einem solchen Sinn, dass ein Durchflussquerschnitt zwischen den beiden Arbeitsanschlüssen A und B verkleinert oder geschlossen wird.

Der Steuerschieber 18 ragt über den Bohrungsabschnitt 21 hinaus in den Bohrungsabschnitt 22 der Bohrung 19 im Deckel 17 hinein. Der Durchmesser des Bohrungsabschnitts 22 ist gleich den Führungsdurchmessern D4 an Einbaubuchse 15 und Steuerschieber 18. Der Raum im Deckel 17 hinter dem Steuerschieber 18 ist durch einen in eine Ringnut 63 des Steuerschiebers 18 eingelegten Dichtring 64 gut gegen die Steuerkammer 62 abgedichtet.

In den Steuerschieber 18 ist von seiner Stirnseite 55 her eine zentrale Axialbohrung 70 begrenzter Länge eingebracht, deren Durchmesser unter Berücksichtigung der Festigkeit des Steuerschiebers möglichst groß ist, um einen Steuerschieber mit geringem Gewicht zu haben. In dem zwischen der Sackbohrung 70 und der hinteren Stirnseite 71 verbliebenen Material ist von der hinteren Stirnseite her eine Sackbohrung 72 eingebracht, die der Befestigung des Kernstabs 26 des Wegaufnehmers 12 am Steuerschieber 18 dient. Durch mehrere exzentrisch gelegene kleine Bohrungen 73 in dem verbliebenen Material und durch die Axialbohrung 70 ist eine offene fluidische Verbindung zwischen den Räumen vor den beiden Stirnseiten 55 und 71 des Steuerschiebers 18 geschaffen. Damit ist der Steuerschieber 18 weitgehend druckausgeglichen.

Die Axialbohrung 70 hat von der vorderen Stirnseite 55 des Steuerschiebers 18 aus zunächst über eine gewisse Strecke einen ersten Durchmesser D7 und im Anschluss daran einen zweiten, kleineren Durchmesser D8. Die Stelle des Übergangs zwischen dem größeren Durchmesser D7 und dem kleineren Durchmesser D8 liegt in axialer Richtung so, dass sie sich im Betrieb von der vorderen Stirnseite 55 aus gesehen je nach der Größe des Hubs des Steuerschiebers 18 auch hinter den radialen Öffnungen 45 befinden kann. Der Abschnitt der Axialbohrung 70 mit dem größeren Durchmesser D7 ist also relativ lang. Allerdings endet dieser Abschnitt im Abstand vor der Ringnut 58, damit der Steuerschieber 18 im Bereich der Ringnut noch stabil genug ist. Bei dem gezeigten Ausführungsbeispiel ist der Abstand der Stelle des Übergangs zwischen den beiden Durchmessern von der Sitzsteuerkante 56 des Steuerschiebers 18 etwa halb so groß wie der Abstand der Ringnut 58 von der Sitzsteuerkante. Da der gezeigte Steuerschieber 18 keinen vor der Sitzsteuerkante befindlichen Feinsteuerbereich hat, die Sitzsteuerkante also an der vorderen Stirnseite ausgebildet ist, gilt das soeben Gesagte auch für die Abstände von der vorderen Stirnseite 55.

In dem Abschnitt der Axialbohrung mit dem größeren Durchmesser D7 ist das Verhältnis zwischen dem Außendurchmesser des Steuerschiebers und dem Durchmesser D7 gleich 1,33. Durch einen großen Durchmesser D7 der Axialbohrung 70 im Bereich der Stirnseite 55 sind die auf den Steuerschieber 18 wirkenden Strömumgskräfte gering.

An der Kante zwischen der Axialbohrung 70 und der vorderen Stirnseite 55 des Steuerschiebers befindet sich eine Fase 74, die mit der Achse des Steuerschiebers 18 einen Winkel von 30 Grad einschließt. Damit wird die Stirnseite weiter verkleinert. Die Strömungskräfte werden noch geringer.

### Bezugszeichenliste

- 10: Hauptventil
- 11: Vorsteuerventil
- 12: Wegaufnehmer
- 13: integrierte Elektronik
- 15: Einbaubuchse
- 16: Innenbohrung von 15
- 17: Deckel
- 18: Steuerschieber
- 19: Bohrung in 17
- 20: vordere Seitenfläche von 17
- 21: Abschnitt von 19
- 22: Abschnitt von 19
- 23: hintere Seitenfläche von 17
- 24: Abschnitt von 19
- 25: Dichtstopfen
- 26: Kernstab von 12
- 29: vordere Stirnseite von 15
- 30: Hydraulikblock
- 31: Einbaubohrung
- 32: Bohrungsabschnitt von 31
- 33: Bohrungsabschnitt von 31
- 34: erster Buchsenabschnitt von 15
- 35: Ringnut in 34
- 36: Dichtring
- 37: zweiter Buchsenabschnitt von 15
- 38: Ringnut in 42
- 39: Dichtring
- 42: dritter Buchsenabschnitt
- 43: Ringkanal
- 44: Entlastungskerbe
- 45: radiale Öffnungen
- 46: umlaufende Nut
- 47: Innenstufe in 15
- 55: vordere Stirnseite von 18
- 56: Sitzsteuerkante von 18
- 57: Druckausgleichsrillen in 18
- 58: Ringnut in 18
- 59: Dichtring in 58
- 60: Schieberbund
- 61: Steuerkammer
- 62: Steuerkammer
- 63: Ringnut in 18
- 64: Dichtring in 63
- 70: Axialbohrung in 18
- 71: hintere Stirnseite von 18
- 72: Sackbohrung
- 73: Bohrungen in 18
- 74: Fase an 18

- A: Arbeitsanschluss
- B: Arbeitsanschluss
- D1: Durchmesser von 32 und Dichtdurchmesser von 34
- D2: Außendurchmesser von 37
- D3: Durchmesser von 33 und Dichtdurchmesser von 42
- D4: Führungsdurchmesser von 37
- D5: Innendurchmesser von 34
- D6: Außendurchmesser, Führungsdurchmesser von 18
- D7: erster, größerer Durchmesser von 70
- D8: zweiter, kleinerer Durchmesser von 70

## Patentansprüche

1. Vorgesteuertes hydraulisches Wege-Einbauventil mit einer in eine Einbaubohrung (31) eines Hydraulikblocks (30) einzusetzenden Einbaubuchse (15), die eine Innenbohrung (16) hat und die zu ihrer vorderen Stirnseite (29) hin einen ersten Buchsenabschnitt (34) mit einem ersten äußeren Dichtdurchmesser (D1) und zu ihrer hinteren Stirnseite hin einen dritten Buchsenabschnitt (42) mit einem gegenüber dem Dichtdurchmesser (D1) im ersten Buchsenabschnitt (34) größeren zweiten äußeren Dichtdurchmesser (D3) und dazwischen einen zweiten Buchsenabschnitt (37) aufweist, in dem sie eine Reihe von radialen Öffnungen (45) hat und in dem sie im Bereich und jeweils über eine gewisse Strecke beidseits der radialen Öffnungen (45) einen Außendurchmesser (D2) besitzt, der größer als der erste äußere Dichtdurchmesser (D1) und kleiner als der zweite äußere Dichtdurchmesser (D3) ist, und mit einem Steuerschieber (18), der in der Innenbohrung (16) der Einbaubuchse (15) in axialer Richtung geführt ist und mit dem ein Durchflussquerschnitt zwischen der Innenbohrung (16) und den radialen Öffnungen (45) der Einbaubuchse (15) steuerbar ist, wobei der Steuerschieber (18) zumindest hinter den radialen Öffnungen (45) auf einem Führungsdurchmesser (D4) der Einbaubuchse (15) geführt ist und ein Innendurchmesser (D5) der Einbaubuchse (15) bis in den Bereich der radialen Öffnungen (45) mindestens so groß wie der Führungsdurchmesser (D4) ist, wobei das Verhältnis zwischen dem ersten äußeren Dichtdurchmesser (D1) und dem Führungsdurchmesser (D4) für den Steuerschieber (18) im Bereich zwischen 1,10 und 1,28 liegt,
**gekennzeichnet durch** einen Ventildeckel (17), der auf die Einbaubuchse (15) aufgesetzt ist, wobei der Steuerschieber (18) in den Ventildeckel (17) hineinragt, und wobei der Steuerschieber (18) zu seiner hydraulischen Betätigung einen Schieberbund (60) besitzt, der zusammen mit dem Ventildeckel (17) zwei Steuerkammern (61, 62) voneinander trennt, und wobei zur Betätigung des Steuerschiebers (18) über ein Vorsteuerventil (11) der einen Steuerkammer (61, 62) Druckmittel zugeführt wird und aus der anderen Steuerkammer (62, 61) Druckmittel abgelassen wird.

2. Vorgesteuertes hydraulisches Wegeventil nach Patentanspruch 1, wobei das Verhältnis zwischen dem ersten äußeren Dichtdurchmesser (D1) und dem Führungsdurchmesser (D4) im Bereich zwischen 1,12 und 1,27, insbesondere zwischen 1,12 und 1,25 liegt.

3. Vorgesteuertes hydraulisches Wegeventil nach Patentanspruch 1, wobei der Steuerschieber (18) mit einer Sitzsteuerkante (56) mit einer sich in der Innenbohrung (16) der Einbaubuchse (15) vor den radialen Öffnungen (45) zwischen diesen und der vorderen Stirnseite (29) an der Einbaubuchse (15) befindlichen Innenstufe (47) zusammenwirkt, wobei der Steuerschieber (18) zumindest hinter den radialen Öffnungen (45) auf dem Führungsdurchmesser (D4) der Einbaubuchse (15) in axialer Richtung geführt ist und der Innendurchmesser (D5) der Einbaubuchse (15) bis in den Bereich der radialen Öffnungen (45) mindestens so groß wie der Führungsdurchmesser (D4) ist und wobei das Verhältnis zwischen dem ersten äußeren Dichtdurchmesser (D1) und dem Führungsdurchmesser (D4) im Bereich zwischen 1,10 und 1,22 liegt.

4. Vorgesteuertes hydraulisches Wegeventil nach Patentanspruch 3, wobei das Verhältnis zwischen dem ersten äußeren Dichtdurchmesser (D1) und dem Führungsdurchmesser (D4) im Bereich zwischen 1,12 und 1,20 liegt.

5. Vorgesteuertes hydraulisches Wegeventil nach Patentanspruch 3 oder 4, wobei der Innendurchmesser (D5) der Einbaubuchse (15) von der vorderen Stirnseite (29) her bis zur Innenstufe (47) im Wesentlichen konstant ist und wobei das Verhältnis zwischen dem ersten äußeren Dichtdurchmesser (D1) und dem Innendurchmesser (D5) der Einbaubuchse (15) von der vorderen Stirnseite (29) bis zur Innenstufe (47) in einem Bereich zwischen 1,10 und 1,30, insbesondere in einem Bereich zwischen 1,15 und 1,25 liegt.

6. Vorgesteuertes hydraulisches Wegeventil nach einem vorhergehenden Patentanspruch, wobei der zweite Buchsenabschnitt (37) einen konstanten Außendurchmesser (D2) hat und wobei das Verhältnis zwischen dem konstanten Außendurchmesser (D2) des zweiten Buchsenabschnitts (37) und dem Führungsdurchmesser (D4) im Bereich zwischen 1,15 und 1,35, insbesondere zwischen 1,20 und 1,30 liegt.

7. Vorgesteuertes hydraulisches Wegeventil nach einem vorhergehenden Patentanspruch, wobei die Innenstufe (47) an der Einbaubuchse (15) eine Breite in einem Bereich zwischen 0,8 mm und 1,7 mm, insbesondere in einem Bereich zwischen 1 mm und 1,5 mm hat, insbesondere 1 mm oder 1,5 mm ist.

8. Vorgesteuertes hydraulisches Wegeventil nach einem vorhergehenden Patentanspruch, wobei am Übergang vom ersten Buchsenabschnitt (34) zum zweiten Buchsenabschnitt (37) außen eine umlaufende verrundete Entlastungskerbe (44) vorhanden ist, in der der Außendurchmesser der Einbaubuchse (15) geringer ist als der erste äußere Dichtdurchmesser (D1).

9. Vorgesteuertes hydraulisches Wegeventil nach einem vorhergehenden Patentanspruch, wobei die Einbaubuchse (15) im Bereich der radialen Öffnungen (45) innen eine umlaufende Nut (46) aufweist und wobei vorzugsweise die Tiefe der umlaufenden Nut (46) etwa 2 mm beträgt.

10. Vorgesteuertes hydraulisches Wegeventil nach einem vorhergehenden Patentanspruch, wobei der Steuerschieber (18) eine Axialbohrung (70) aufweist, die in einem Fluidpfad zwischen den beiden Stirnseiten (55, 71) des Steuerschiebers (18) liegt, wobei die Axialbohrung (70) von der sich im Bereich der Innenstufe (47) der Einbaubuchse (15) befindlichen, vorderen Stirnseite (55) des Steuerschiebers (18) her über eine gewisse Strecke einen ersten Durchmesser (D7) und im Anschluss daran einen zweiten, kleineren Durchmesser (D8) hat und wobei der Übergang zwischen den beiden Durchmessern am Steuerschieber (18) derart gelegen ist, dass er sich im Betrieb von der vorderen Stirnseite (55) aus gesehen je nach der Größe des Hubs des Steuerschiebers (18) auch hinter den radialen Öffnungen (45) befindet.

11. Vorgesteuertes hydraulisches Wegeventil nach Patentanspruch 10, wobei sich an der Kante zwischen der Axialbohrung (70) und der vorderen Stirnseite (55) des Steuerschiebers (18) eine Fase (74), vorzugsweise eine 30-Grad-Fase befindet.

12. Vorgesteuertes hydraulisches Wegeventil nach einem vorhergehenden Patentanspruch, wobei der Steuerschieber (18) eine außen an ihm umlaufende Ringnut (58) zur Aufnahme eines Dichtrings (59) aufweist und wobei die Position der Ringnut (58) am Steuerschieber (18) derart ist, dass sich die Ringnut (58) axial gesehen im Bereich des zweiten Buchsenabschnitts (37) befindet, wenn der Steuerschieber (18) auf der Innenstufe (47) der Einbaubuchse (15) aufsitzt.

13. Vorgesteuertes hydraulisches Wegeventil nach den Patentansprüchen 10 und 12, wobei sich der Übergang zwischen dem größeren Durchmesser (D7) und dem kleineren Durchmesser (D8) der Axialbohrung (70) im Steuerschieber (18) im Abstand vor der Ringnut (58) befindet.

14. Vorgesteuertes hydraulisches Wegeventil nach Patentanspruch 13, wobei der Abstand des Übergangs zwischen dem größeren Durchmesser (D7) und dem kleineren Durchmesser (D8) der Axialbohrung (70) im Steuerschieber (18) von der Sitzsteuerkante (56) des Steuerschiebers (18) etwa halb so groß ist wie der Abstand der Ringnut (58) von der Sitzsteuerkante (56).

15. Vorgesteuertes hydraulisches Wegeventil nach einem der Patentansprüche 12, 13 oder 14, wobei sich die Ringnut (58) in einem Führungsbereich des Steuerschiebers (18) befindet und wobei der Steuerschieber (18) beidseits der Ringnut (58) Druckausgleichsrillen (57) aufweist.

## Claims

1. Pilot-controlled hydraulic directional cartridge valve with an installation bushing (15) which is to be inserted into an installation bore (31) of a hydraulic block (30), has an inner bore (16), and, towards its front end side (29), has a first bushing section (34) with a first outer sealing diameter (D1) and, towards its rear end side, has a third bushing section (42) with a second outer sealing diameter (D3) which is greater than the sealing diameter (D1) in the first bushing section (34) and, in between, has a second bushing section (37), in which it has a series of radial openings (45) and in which, in the region and in each case over a certain distance on both sides of the radial openings (45), it has an outer diameter (D2) which is greater than the first outer sealing diameter (D1) and is smaller than the second outer sealing diameter (D3), and with a control slide (18) which is guided in the axial direction in the inner bore (16) of the installation bushing (15) and by way of which a throughflow cross section between the inner bore (16) and the radial openings (45) of the installation bushing (15) can be controlled, the control slide (18) being guided at least behind the radial openings (45) on a guide diameter (D4) of the installation bushing (15), and an inner diameter (D5) of the installation bushing (15) as far as into the region of the radial openings (45) being at least as great as the guide diameter (D4), the ratio between the first outer sealing diameter (D1) and the guide diameter (D4) for the control slide (18) lying in the range between 1.10 and 1.28,
**characterized by** a valve cover (17) which is placed onto the installation bushing (15), the control slide (18) protruding into the valve cover (17), and the control slide (18) having, for the hydraulic actuation thereof, a slide collar (60) which, together with the valve cover (17), disconnects two control chambers (61, 62) from one another, and, in order to actuate the control slide (18), pressure medium being fed via a pilot control valve (11) to the one control chamber (61, 62) and pressure medium being discharged from the other control chamber (62, 61).

2. Pilot-controlled hydraulic directional valve according to Patent Claim 1, the ratio between the first outer sealing diameter (D1) and the guide diameter (D4) lying in the range between 1.12 and 1.27, in particular between 1.12 and 1.25.

3. Pilot-controlled hydraulic directional valve according to Patent Claim 1, the control slide (18) interacting by way of a seat control edge (56) with an inner step (47) which is situated in the inner bore (16) of the installation bushing (15) in front of the radial openings (45) between the latter and the front end side (29) on the installation bushing (15), the control slide (18) being guided in the axial direction at least behind the radial openings (45) on the guide diameter (D4) of the installation bushing (15), and the inner diameter (D5) of the installation bushing (15) as far as into the region of the radial openings (45) being at least as great as the guide diameter (D4), and the ratio between the first outer sealing diameter (D1) and the guide diameter (D4) lying in the range between 1.10 and 1.22.

4. Pilot-controlled hydraulic directional valve according to Patent Claim 3, the ratio between the first outer sealing diameter (D1) and the guide diameter (D4) lying in the range between 1.12 and 1.20.

5. Pilot-controlled hydraulic directional valve according to Patent Claim 3 or 4, the inner diameter (D5) of the installation bushing (15) being substantially constant from the front end side (29) as far as the inner step (47), and the ratio between the first outer sealing diameter (D1) and the inner diameter (D5) of the installation bushing (15) from the front end side (29) as far as the inner step (47) lying in a range between 1.10 and 1.30, in particular in a range between 1.15 and 1.25.

6. Pilot-controlled hydraulic directional valve according to a preceding patent claim, the second bushing section (37) having a constant outer diameter (D2), and the ratio between the constant outer diameter (D2) of the second bushing section (37) and the guide diameter (D4) lying in the range between 1.15 and 1.35, in particular between 1.20 and 1.30.

7. Pilot-controlled hydraulic directional valve according to a preceding patent claim, the inner step (47) on the installation bushing (15) having a width in a range between 0.8 mm and 1.7 mm, in particular in a range between 1 mm and 1.5 mm, in particular being 1 mm or 1.5 mm.

8. Pilot-controlled hydraulic directional valve according to a preceding patent claim, there being a peripheral rounded relief notch (44) on the outside at the transition from the first bushing section (34) to the second bushing section (37), in which relief notch (44) the outer diameter of the installation bushing (15) is smaller than the first outer sealing diameter (D1).

9. Pilot-controlled hydraulic directional valve according to a preceding patent claim, the installation bushing (15) having a peripheral groove (46) on the inside in the region of the radial openings (45), and the depth of the peripheral groove (46) preferably being approximately 2 mm.

10. Pilot-controlled hydraulic directional valve according to a preceding patent claim, the control slide (18) having an axial bore (70) which lies in a fluid path between the two end sides (55, 71) of the control slide (18), the axial bore (70) having a first diameter (D7) over a certain distance from the front end side (55), situated in the region of the inner step (47) of the installation bushing (15), of the control slide (18) and having, following this, a second, smaller diameter (D8), and the transition between the two diameters being situated on the control slide (18) in such a way that it is also situated behind the radial openings (45) during operation, as viewed from the front end side (55), depending on the size of the stroke of the control slide (18) .

11. Pilot-controlled hydraulic directional valve according to Patent Claim 10, a chamfer (74), preferably a 30-degree chamfer, being situated on the edge between the axial bore (70) and the front end side (55) of the control slide (18).

12. Pilot-controlled hydraulic directional valve according to a preceding patent claim, the control slide (18) having an annular groove (58) running around on the outside of it for receiving a sealing ring (59), and the position of the annular groove (58) on the control slide (18) being such that, as viewed axially, the annular groove (58) is situated in the region of the second bushing section (37) when the control slide (18) is seated on the inner step (47) of the installation bushing (15) .

13. Pilot-controlled hydraulic directional valve according to Patent Claims 10 and 12, the transition between the greater diameter (D7) and the smaller diameter (D8) of the axial bore (70) in the control slide (18) being situated at a spacing in front of the annular groove (58).

14. Pilot-controlled hydraulic directional valve according to Patent Claim 13, the spacing of the transition between the greater diameter (D7) and the smaller diameter (D8) of the axial bore (70) in the control slide (18) from the seat control edge (56) of the control slide (18) being approximately half as great as the spacing of the annular groove (58) from the seat control edge (56).

15. Pilot-controlled hydraulic directional valve according to one of Patent Claims 12, 13 or 14, the annular groove (58) being situated in a guide region of the control slide (18), and the control slide (18) having pressure equalization channels (57) on both sides of the annular groove (58).

## Revendications

1. Soupape à voies intégrée hydraulique pilotée dotée d'une douille d'installation (15) à insérer dans un alésage d'installation (31) d'un bloc hydraulique (30), laquelle douille a un alésage intérieur (16) et laquelle présente, vers sa face frontale avant (29), une première partie de douille (34) présentant un premier diamètre d'étanchéité extérieur (D1) et, vers sa face frontale arrière, une troisième partie de douille (42) présentant un deuxième diamètre d'étanchéité extérieur (D3) plus grand que le diamètre d'étanchéité (D1) dans la première partie de douille (34) et, entre celles-ci, une deuxième partie de douille (37) dans laquelle elle a une rangée d'ouvertures radiales (45) et dans laquelle elle présente un diamètre extérieur (D2) dans la région et respectivement sur une certaine longueur des deux côtés des ouvertures radiales (45), lequel diamètre extérieur est plus grand que le premier diamètre d'étanchéité extérieur (D1) et plus petit que le deuxième diamètre d'étanchéité extérieur (D3), et dotée d'un tiroir de commande (18) qui est guidé dans la direction axiale dans l'alésage intérieur (16) de la douille d'installation (15) et à l'aide duquel une section transversale d'écoulement entre l'alésage intérieur (16) et les ouvertures radiales (45) de la douille d'installation (15) peut être commandée, le tiroir de commande (18) étant guidé au moins derrière les ouvertures radiales (45) sur un diamètre de guidage (D4) de la douille d'installation (15) et un diamètre intérieur (D5) de la douille d'installation (15) jusque dans la région des ouvertures radiales (45) étant au moins aussi grand que le diamètre de guidage (D4), le rapport entre le premier diamètre d'étanchéité extérieur (D1) et le diamètre de guidage (D4) pour le tiroir de commande (18) se situant dans la plage entre 1,10 et 1,28,
**caractérisée par** un couvercle de soupape (17) qui est placé sur la douille d'installation (15), le tiroir de commande (18) pénétrant dans le couvercle de soupape (17), et le tiroir de commande (18) possédant, pour son actionnement hydraulique, un collier de tiroir (60) qui, conjointement avec le couvercle de soupape (17), sépare deux chambres de commande (61, 62) l'une de l'autre, et, pour l'actionnement du tiroir de commande (18), par le biais d'une soupape pilote (11), du fluide sous pression étant acheminé à l'une des chambres de commande (61, 62) et du fluide sous pression étant évacué de l'autre chambre de commande (62, 61).

2. Soupape à voies hydraulique pilotée selon la revendication 1, le rapport entre le premier diamètre d'étanchéité extérieur (D1) et le diamètre de guidage (D4) se situant dans la plage entre 1,12 et 1,27, en particulier entre 1,12 et 1,25.

3. Soupape à voies hydraulique pilotée selon la revendication 1, le tiroir de commande (18) coopérant, par une arête de commande de siège (56), avec un gradin intérieur (47) se trouvant dans l'alésage intérieur (16) de la douille d'installation (15) devant les ouvertures radiales (45) entre celles-ci et la face frontale avant (29) sur la douille d'installation (15), le tiroir de commande (18) étant guidé dans la direction axiale au moins derrière les ouvertures radiales (45) sur le diamètre de guidage (D4) de la douille d'installation (15) et le diamètre intérieur (D5) de la douille d'installation (15) jusque dans la région des ouvertures radiales (45) étant au moins aussi grand que le diamètre de guidage (D4) et le rapport entre le premier diamètre d'étanchéité extérieur (D1) et le diamètre de guidage (D4) se situant dans la plage entre 1,10 et 1,22.

4. Soupape à voies hydraulique pilotée selon la revendication 3, le rapport entre le premier diamètre d'étanchéité extérieur (D1) et le diamètre de guidage (D4) se situant dans la plage entre 1,12 et 1,20.

5. Soupape à voies hydraulique pilotée selon la revendication 3 ou 4, le diamètre intérieur (D5) de la douille d'installation (15) à partir de la face frontale avant (29) jusqu'au gradin intérieur (47) étant sensiblement constant et le rapport entre le premier diamètre d'étanchéité extérieur (D1) et le diamètre intérieur (D5) de la douille d'installation (15) à partir de la face frontale avant (29) jusqu'au gradin intérieur (47) se situant dans une plage entre 1,10 et 1,30, en particulier dans une plage entre 1,15 et 1,25.

6. Soupape à voies hydraulique pilotée selon une revendication précédente, la deuxième partie de douille (37) ayant un diamètre extérieur constant (D2) et le rapport entre le diamètre extérieur constant (D2) de la deuxième partie de douille (37) et le diamètre de guidage (D4) se situant dans la plage entre 1,15 et 1,35, en particulier entre 1,20 et 1,30.

7. Soupape à voies hydraulique pilotée selon une revendication précédente, le gradin intérieur (47) sur la douille d'installation (15) ayant une largeur dans une plage entre 0,8 mm et 1,7 mm, en particulier dans une plage entre 1 mm et 1,5 mm, en particulier de 1 mm ou 1,5 mm.

8. Soupape à voies hydraulique pilotée selon une revendication précédente, une entaille de décharge (44) arrondie périphérique étant présente extérieurement à la transition de la première partie de douille (34) à la deuxième partie de douille (37), entaille dans laquelle le diamètre extérieur de la douille d'installation (15) est plus petit que le premier diamètre d'étanchéité extérieur (D1).

9. Soupape à voies hydraulique pilotée selon une revendication précédente, la douille d'installation (15) présentant une rainure périphérique (46) intérieurement dans la région des ouvertures radiales (45) et de préférence la profondeur de la rainure périphérique (46) valant approximativement 2 mm.

10. Soupape à voies hydraulique pilotée selon une revendication précédente, le tiroir de commande (18) présentant un alésage axial (70) qui se situe dans un trajet de fluide entre les deux faces frontales (55, 71) du tiroir de commande (18), l'alésage axial (70) ayant, à partir de la face frontale avant (55) du tiroir de commande (18) située dans la région du gradin intérieur (47) de la douille d'installation (15), sur une certaine distance, un premier diamètre (D7) et, dans le prolongement de celle-ci, un deuxième diamètre (D8) plus petit, et la transition entre les deux diamètres sur le tiroir de commande (18) étant située de telle sorte que, lors du fonctionnement, vue depuis la face frontale avant (55), elle se trouve également derrière les ouvertures radiales (45) en fonction de la longueur de la course du tiroir de commande (18).

11. Soupape à voies hydraulique pilotée selon la revendication 10, un chanfrein (74), de préférence un chanfrein à 30°, se trouvant au niveau de l'arête entre l'alésage axial (70) et la face frontale avant (55) du tiroir de commande (18).

12. Soupape à voies hydraulique pilotée selon une revendication précédente, le tiroir de commande (18) présentant une rainure annulaire (58) périphérique extérieurement sur celui-ci pour la réception d'une bague d'étanchéité (59) et la position de la rainure annulaire (58) sur le tiroir de commande (18) étant telle que la rainure annulaire (58) se trouve, vue axialement, dans la région de la deuxième partie de douille (37) lorsque le tiroir de commande (18) repose sur le gradin intérieur (47) de la douille d'installation (15).

13. Soupape à voies hydraulique pilotée selon les revendications 10 et 12, la transition entre le diamètre (D7) plus grand et le diamètre (D8) plus petit de l'alésage axial (70) dans le tiroir de commande (18) se trouvant à distance devant la rainure annulaire (58).

14. Soupape à voies hydraulique pilotée selon la revendication 13, la distance de la transition entre le diamètre (D7) plus grand et le diamètre (D8) plus petit de l'alésage axial (70) dans le tiroir de commande (18) à l'arête de commande de siège (56) du tiroir de commande (18) étant approximativement égale à la distance de la rainure annulaire (58) à l'arête de commande de siège (56) .

15. Soupape à voies hydraulique pilotée selon l'une des revendications 12, 13 ou 14, la rainure annulaire (58) se trouvant dans une région de guidage du tiroir de commande (18) et le tiroir de commande (18) présentant des gorges de compensation de pression (57) des deux côtés de la rainure annulaire (58).
